# EUROPEAN PATENT SPECIFICATION

(11) **EP 4 116 635 B1**
(45) Date of publication and mention of the grant of the patent: **17.09.2025**
(21) Application number: 20891468.9
(22) Date of filing: 05.03.2020
(51) Int. Cl.: F24F 11/43, F24F 11/48, F24F 11/59, F24F 11/61, F24F 11/62, F24F 13/22, F24F 1/0059

(54) **AIR CONDITIONER**
KLIMAANLAGE
CLIMATISEUR

(43) Date of publication of application: 11.01.2023
(73) Proprietor: Hitachi-Johnson Controls Air Conditioning, Inc., Tokyo 105-0022 (JP)
(72) Inventor: OHATA, Ryosuke, Tokyo 105-0022 (JP)
(74) Representative: MERH-IP Matias Erny Reichl Hoffmann Patentanwälte PartG mbB
(86) International application number: PCT/JP2020/009328
(87) International publication number: WO 2021/176637

(56) References cited:
- WO-A1-2019/220488
- CN-A- 108 361 931
- JP-A- 2005 098 659
- JP-A- 2012 207 867
- JP-A- 2016 138 666
- JP-A- 2019 215 149
- JP-B1- 6 559 923
- JP-B2- 6 517 877

## Description

### TECHNICAL FIELD

The present invention relates to an air-conditioner.

### BACKGROUND ART

As the technique of bringing an indoor heat exchanger of an air-conditioner into a clean state, Patent Literature 1 describes, for example, washing operation in which a control device heats and defrosts an indoor heat exchanger after frost has been formed on the indoor heat exchanger by cooling thereof.

### CITATION LIST

### PATENT LITERATURE

PATENT LITERATURE 1: Japanese Patent No. 6296633
PATENT LITERATURE 2: JP 6 559923 B1
PATENT LITERATURE 3: CN 108 361 931 A

### SUMMARY OF INVENTION

### PROBLEMS TO BE SOLVED BY INVENTION

Patent Literature 1 describes the washing operation for an air-conditioner including a single outdoor unit and a single indoor unit, but fails to describe washing operation for a multi-type air-conditioner including multiple indoor units in a single system. For example, when the washing operation is performed separately for each indoor unit satisfying a washing operation start condition in the multi-type air-conditioner, there is a probability that the frequency of driving a compressor increases and the power consumption of the air-conditioner increases accordingly.
Patent literature 2 discloses an air conditioner which is equipped with a refrigerant circuit, a control unit, and a drain pan located below the indoor heat exchanger.
Patent literature 3 discloses a multiple on-line self-cleaning method which is applied to the multi-split air conditioning system, and the multi-split air conditioning system comprises a plurality of indoor units.

Even in a case where the washing operation is performed for some of the multiple indoor units, not only indoor heat exchangers of these indoor units but also some pipes (e.g., a shared portion of pipes in which gas refrigerant flows) are cooled. As a result, when the washing operation is performed separately for each of the multiple indoor units, the power consumption of the indoor unit per unit capacity increases. Considering such a situation, energy saving in the washing operation has been demanded.

For this reason, the present invention is intended to provide an air-conditioner achieving energy saving in washing of multiple indoor heat exchangers.

### SOLUTIONS TO PROBLEMS

The above cited problems are solved in accordance with the appended set of claims. The air-conditioner according to the present invention, in particular, includes a refrigerant circuit configured such that an outdoor unit having a compressor and an outdoor heat exchanger and multiple indoor units having indoor expansion valves and indoor heat exchangers are connected to each other through pipes and a control section configured to control at least the compressor and the multiple indoor expansion valves. Until a predetermined indoor unit included in the multiple indoor units starts the processing of freezing or forming dew on the indoor heat
exchanger, the control section does not start the processing for the other indoor units.

### EFFECTS OF INVENTION

According to the present invention, the air-conditioner achieving energy saving in washing of the multiple indoor heat exchangers can be provided.

### BRIEF DESCRIPTION OF DRAWINGS

Fig. 1 is a configuration diagram including a refrigerant circuit of an air-conditioner according to a first embodiment.
Fig. 2 is a diagram for describing an equipment connection relationship of the air-conditioner according to the first embodiment.
Fig. 3 is a functional block diagram of the air-conditioner according to the first embodiment.
Fig. 4 is a flowchart of processing executed by a control section of the air-conditioner according to the first embodiment.
Fig. 5 is a flowchart regarding washing processing in the air-conditioner according to the first embodiment.
Fig. 6 is a time chart of the washing processing in the air-conditioner according to the first embodiment.
Fig. 7A is a flowchart of processing executed by a control section of an air-conditioner according to a second embodiment.
Fig. 7B is a flowchart of the processing executed by the control section of the air-conditioner according to the second embodiment.
Fig. 8 is a time chart of washing processing in the air-conditioner according to the second embodiment.

### DESCRIPTION OF EMBODIMENTS

### <<First Embodiment>>

### <Configuration of Air-Conditioner>

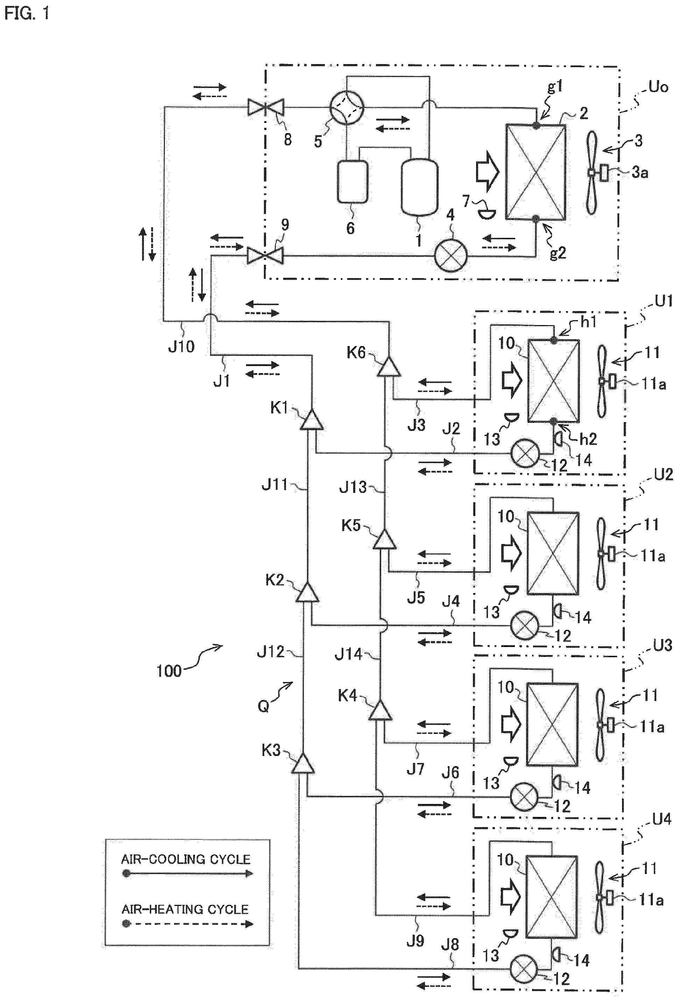

Fig. 1 is a configuration diagram including a refrigerant circuit Q of an air-conditioner 100 according to a first embodiment. Note that in Fig. 1, the flow of refrigerant in an air-cooling cycle (a refrigeration cycle in air-cooling operation) is indicated by solid arrows and the flow of refrigerant in an air-heating cycle (a refrigeration cycle in air-heating operation) is indicated by dashed arrows. Moreover, in Fig. 1, the flow of air in the vicinity of an outdoor heat exchanger 2 and four indoor heat exchangers 10 is indicated by white arrows.

The air-conditioner 100 is equipment configured to perform air-conditioning such as the air-cooling operation or the air-heating operation. Fig. 1 shows, as one example, the single-system multi-type air-conditioner 100 configured such that a single outdoor unit Uo and four indoor units U1, U2, U3 and U4 are connected to each other in a predetermined manner through pipes.

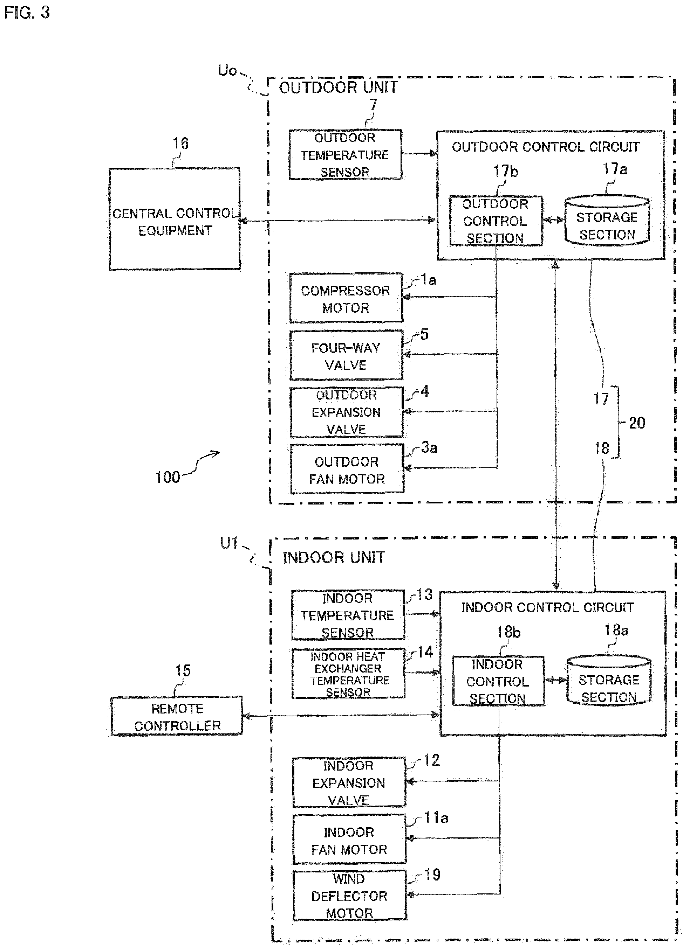

The air-conditioner 100 includes, as equipment provided in the outdoor unit Uo, a compressor 1, the outdoor heat exchanger 2, an outdoor fan 3, an outdoor expansion valve 4, a four-way valve 5, an accumulator 6, an outdoor temperature sensor 7, and gate valves 8 and 9. The compressor 1 is equipment configured to compress low-temperature low-pressure gas refrigerant to discharge high-temperature highpressure gas refrigerant, and includes a compressor motor 1a (see Fig. 3) as a drive source. For example, a scroll compressor or a rotary compressor is used as such a compressor 1.

The outdoor heat exchanger 2 is a heat exchanger configured to exchange heat between refrigerant flowing in a heat transfer pipe (not shown) of the outdoor heat exchanger 2 and external air sent from the outdoor fan 3. One end g1 of the outdoor heat exchanger 2 is, by switching of the four-way valve 5, connected to a suction side or a discharge side of the compressor 1, and the other end g2 is connected to a liquid-side pipe J1.

The outdoor fan 3 is a fan configured to send external air to the outdoor heat exchanger 2. The outdoor fan 3 includes an outdoor fan motor 3a as a drive source, and is placed in the vicinity of the outdoor heat exchanger 2. The outdoor expansion valve 4 is an electronic expansion valve configured to adjust the flow rate of refrigerant flowing in the outdoor heat exchanger 2 and depressurize refrigerant when the outdoor heat exchanger 2 functions as an evaporator. The outdoor expansion valve 4 is provided at the liquid-side pipe J1.

The four-way valve 5 is a valve configured to switch a refrigerant flow path in a predetermined manner according to an operation mode in air-conditioning. The accumulator 6 is a shell-shaped member configured to separate refrigerant flowing in through the four-way valve 5 into gas and liquid. After having been separated into the gas and the liquid by the accumulator 6, the gaseous refrigerant is guided to the suction side of the compressor 1.

The outdoor temperature sensor 7 is a sensor configured to detect an outdoor temperature as an external air temperature, and is placed at a predetermined location (in an example of Fig. 1, an air suction side of the outdoor heat exchanger 2) in the outdoor unit Uo. Note that although not shown in Fig. 1, each sensor configured to detect one or more of the discharge pressure, discharge temperature, suction pressure, and suction temperature of the compressor 1 may be provided as necessary.

The gate valves 8 and 9 are valves opened after installation of the air-conditioner 100 such that refrigerant sealed in the outdoor unit Uo flows across the entirety of the refrigerant circuit Q. One gate valve 8 is provided at a gas-side pipe J10, and the other gate valve 9 is provided at the liquid-side pipe J1.

The air-conditioner 100 includes, as equipment provided in the indoor unit U1, the indoor heat exchangers 10, indoor fans 11, indoor expansion valves 12, indoor temperature sensors 13, and indoor heat exchanger temperature sensors 14. The indoor heat exchanger 10 is a heat exchanger configured to exchange heat between refrigerant flowing in a heat transfer pipe (not shown) of the indoor heat exchanger 10 and indoor air (air in an air-conditioning room) sent from the indoor fan 11. One end h1 of the indoor heat exchanger 10 is connected to a gas-side pipe J3, and the other end h2 is connected to a liquid-side pipe J2.

The indoor fan 11 is a fan configured to send indoor air to the indoor heat exchanger 10. The indoor fan 11 has an indoor fan motor 11a as a drive source, and is placed in the vicinity of the indoor heat exchanger 10. The indoor expansion valve 12 is an electronic expansion valve configured to adjust the flow rate of refrigerant flowing in the indoor heat exchanger 10 and depressurize refrigerant when the indoor heat exchanger 10 functions as an evaporator. The indoor expansion valve 12 is provided at the liquid-side pipe J2.

The indoor temperature sensor 13 is a sensor configured to detect the temperature of indoor air as the temperature of the air-conditioning room. In the example of Fig. 1, the indoor temperature sensor 13 is placed on an air suction side of the indoor heat exchanger 10. The indoor heat exchanger temperature sensor 14 is a sensor configured to detect the temperature of the indoor heat exchanger 10. In the example of Fig. 1, the indoor heat exchanger temperature sensor 14 is placed in the vicinity of the other end h2 of the indoor heat exchanger 10 at the pipe J2. Note that the position of the indoor heat exchanger temperature sensor 14 is not limited to that in the example of Fig. 1. For example, the indoor heat exchanger temperature sensor 14 may be placed in the vicinity of one end h1 of the indoor heat exchanger 10 at the pipe J3. Alternatively, the indoor heat exchanger temperature sensor 14 may be directly placed at the indoor heat exchanger 10.

The remaining three indoor units U2, U3 and U4 have configurations similar to that of the above-described indoor unit U1, and therefore, description thereof will be omitted. Liquid-side connection portions K1, K2 and K3 are portions at which a refrigerant flow is branched during the air-cooling cycle and refrigerant flows are joined together during the air-heating cycle. For example, during the air-cooling cycle, refrigerant flowing in the pipe J1 is distributed to the four indoor heat exchangers 10 in a predetermined manner sequentially through the liquid-side connection portions K1, K2 and K3.

Gas-side connection portions K4, K5 and K6 are portions at which refrigerant flows are joined together during the air-cooling cycle and a refrigerant flow is branched during the air-heating cycle. For example, during the air-cooling cycle, refrigerant flows from the four indoor heat exchangers 10 are joined together sequentially through the gas-side connection portions K4, K5 and K6.

According to the operation mode in air-conditioning, refrigerant circulates in a well-known refrigeration cycle (the air-cooling cycle or the air-heating cycle shown in Fig. 1) in the refrigerant circuit Q. For example, in the air-cooling cycle, refrigerant circulates sequentially through the compressor 1, the outdoor heat exchanger 2 (a condenser), the outdoor expansion valve 4, the indoor expansion valves 12, and the indoor heat exchangers 10 (the evaporators). On the other hand, in the air-heating cycle, refrigerant circulates sequentially through the compressor 1, the indoor heat exchangers 10 (condensers), the indoor expansion valves 12, the outdoor expansion valve 4, and the outdoor heat exchanger 2 (the evaporator).

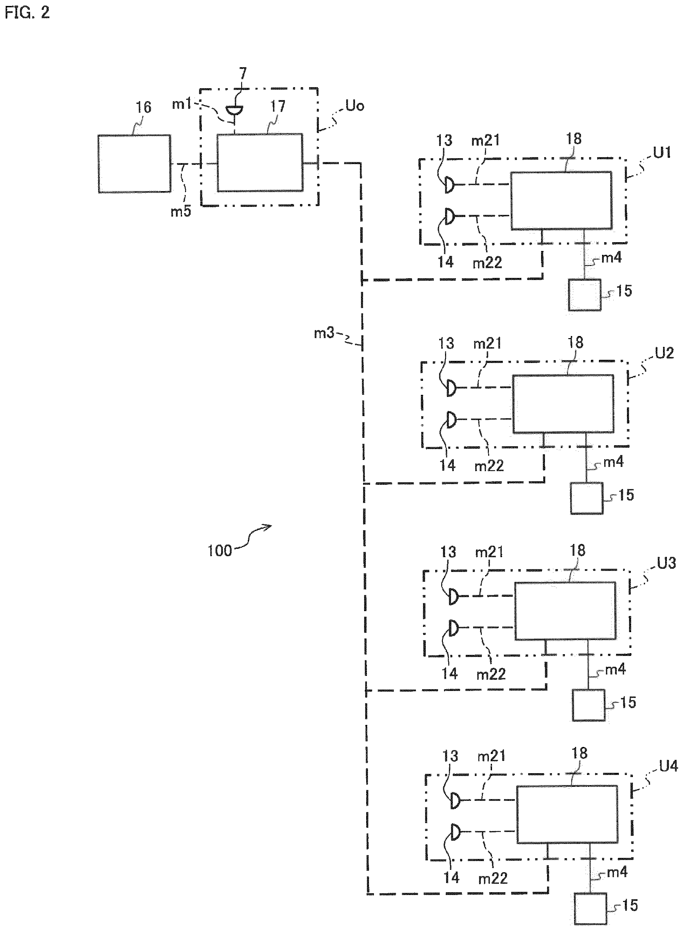

Fig. 2 is a diagram for describing an equipment connection relationship of the air-conditioner 100. As shown in Fig. 2, the air-conditioner 100 includes remote controllers 15 and central control equipment 16 in addition to the above-described configuration. Moreover, the outdoor unit Uo includes an outdoor control circuit 17, and the indoor units U1, U2, U3 and U4 each include indoor control circuits 18.

Although not shown in the figure, each of the outdoor control circuit 17 and the indoor control circuits 18 includes electronic circuits such as a central processing unit (CPU), a read only memory (ROM), a random access memory (RAM), and various interfaces. The CPU executes various types of processing in such a manner that programs stored in the ROM are read and loaded into the RAM.

As shown in Fig. 2, the outdoor control circuit 17 is connected to the outdoor temperature sensor 7 through a line m1. Based on a detection value of each sensor including the outdoor temperature sensor 7 and signals from the remote controllers 15, the outdoor control circuit 17 calculates a control command value for each type of equipment.

The outdoor control circuit 17 is connected to the indoor control circuits 18 through a communication line m3. The indoor control circuit 18 is connected to the indoor temperature sensor 13 through a line m21, and is connected to the indoor heat exchanger temperature sensor 14 through a line m22. A detection value of each of these sensors is transmitted to the outdoor control circuit 17 from the indoor control circuit 18 through the communication line m3. The indoor control circuit 18 controls the indoor fan motor 11a (see Fig. 1) and the indoor expansion valve 12 (see Fig. 1) in a predetermined manner based on the control command value calculated by the outdoor control circuit 17.

In an example of Fig. 2, the four remote controllers 15 are, in one-to-one correspondence, connected to the indoor control circuits 18 of the four indoor units U1, U2, U3 and U4 through lines m4. Note that multiple indoor units may be connected to a single remote controller 15. For example, the remote controller 15 connected to the indoor unit U1 has the function of providing a predetermined control command to the indoor unit U1 by user operation. Examples of the above-described control command include operation/stop of the air-conditioner 100, switching of the operation mode, a change in a set temperature, a set air volume, and a set air direction, and the start of later-described washing processing. Note that the same also applies to the other indoor units U2, U3 and U4.

The central control equipment 16 is a device configured to control, e.g., indications on the four remote controllers 15 and the settings of the four remote controllers 15, and is connected to the outdoor control circuit 17 through a communication line m5. Note that a user (a manager) operates the central control equipment 16 in a predetermined manner so that, e.g., the indications on the four remote controllers 15 can be changed in addition to the air-conditioning settings.

Fig. 3 is a functional block diagram of the air-conditioner 100. Note that Fig. 3 shows the single indoor unit U1 of the four indoor units U1, U2, U3 and U4 and does not show the remaining three indoor units U2, U3 and U4. As shown in Fig. 3, the outdoor control circuit 17 includes a storage section 17a and an outdoor control section 17b. The storage section 17a stores, for example, data input from the central control equipment 16 in addition to the predetermined programs and the detection value of each sensor. The outdoor control section 17b controls, based on the data stored in the storage section 17a, the compressor motor 1a, the four-way valve 5, the outdoor expansion valve 4, the outdoor fan motor 3a and the like.

On the other hand, the indoor control circuit 18 includes a storage section 18a and an indoor control section 18b. The storage section 18a stores, for example, data input through the remote controller 15 in addition to the predetermined programs and the detection value of each sensor. The indoor control section 18b controls, based on the data stored in the storage section 18a, not only the indoor expansion valve 12 and the indoor fan motor 11a but also a wind deflector motor 19 in a predetermined manner. Hereinafter, the outdoor control circuit 17 and the indoor control circuits 18 will be collectively referred to as a "control section 20." Note that the wind deflector motor 19 shown in Fig. 3 is a motor configured to adjust the angle of a wind deflector (not shown) of the indoor unit U1 to adjust the direction of air blown into the room.

Next, a series of processing for washing the indoor heat exchanger 10 (see Fig. 1) will be described. In many cases, a filter (not shown) for collecting dust is provided on the air suction side of the indoor heat exchanger 10. However, there is a probability that fine dust passes through the filter and adheres to the indoor heat exchanger 10. For this reason, the indoor heat exchanger 10 is preferably washed on a regular basis. Thus, in the first embodiment, after the indoor heat exchanger 10 has been frozen (frost has been formed on the indoor heat exchanger 10), ice or frost on the indoor heat exchanger 10 is melted to wash the indoor heat exchanger 10. Such a series of processing is called the "washing processing" for the indoor heat exchanger 10.

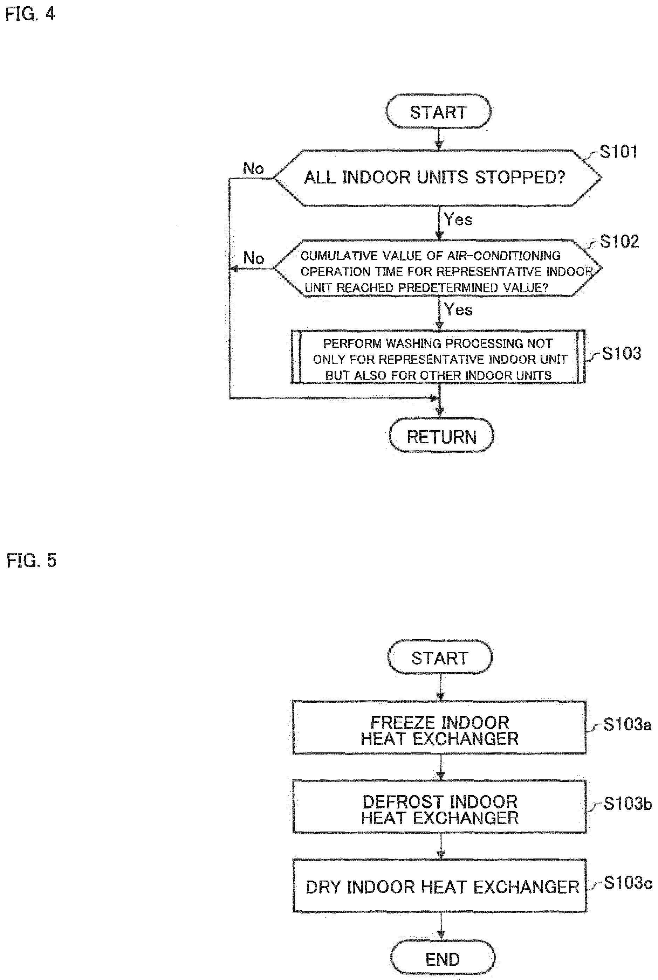

Fig. 4 is a flowchart of the processing executed by the control section of the air-conditioner (see Figs. 1 and 3 as necessary). Note that Fig. 4 shows the processing regarding the washing processing and does not show other types of processing (e.g., normal air-conditioning operation). At a step S101, the control section 20 determines whether or not all of the indoor units U1, U2, U3 and U4 are stopped. In a case where all of the indoor units U1, U2, U3 and U4 are stopped (S101: Yes), the processing of the control section 20 proceeds to a step S102. On the other hand, in a case where at least one indoor unit performs the air-conditioning operation (i.e., is not stopped) at the step S101 (S101: No), the processing of the control section 20 returns to "START" (RETURN).

Note that the washing processing for, e.g., freezing the indoor heat exchanger 10 and the normal air-conditioning operation are greatly different from each other in a pressure acting point on the compressor 1. Thus, when all of the indoor units U1, U2, U3 and U4 are stopped, the control section 20 performs predetermined determination processing (the next step S102) regarding the washing processing.

At the step S102, the control section 20 determines whether or not a cumulative value of an air-conditioning operation time of a representative indoor unit (a predetermined indoor unit) reaches a predetermined value. Note that in the first embodiment, a case where the "representative indoor unit" is set as the indoor unit U1 in advance will be described as one example. Note that the representative indoor unit may be changed as necessary by operation of the central control equipment 16.

Regarding the above-described step S102, the cumulative value of the air-conditioning operation time for the representative indoor unit U1 is, for example, a cumulative value (the sum) of a time for which the normal air-conditioning operation such as the air-cooling operation or the air-heating operation has been performed with reference to the end of the previous washing processing.

At the step S102, in a case where the cumulative value of the air-conditioning operation time for the representative indoor unit U1 reaches the predetermined value (S102: Yes), the processing of the control section 20 proceeds to a step S103. On the other hand, in a case where the cumulative value of the air-conditioning operation time for the representative indoor unit U1 does not reach the predetermined value (S102: No), the processing of the control section 20 returns to "START" (RETURN). Then, the control section 20 repeats the processing of the steps S101, S102 until the condition at the step S102 is satisfied. As described above, during a period in which the processing of the steps S101 and S102 is repeated, the washing processing is not performed for the representative indoor unit U1 and the other indoor units U2, U3 and U4.

That is, the control section 20 does not start the above-described processing (freezing) for the other indoor units U2, U3 and U4 until the predetermined indoor unit U1 included in the multiple indoor units U1, U2, U3 and U4 starts the processing such as freezing of the indoor heat exchanger 10. In this manner, as compared to the case of performing the washing processing separately for each indoor unit, the frequency of driving the compressor 1 can be reduced, and therefore, the power consumption of the air-conditioner 100 can be significantly reduced.

Note that the phrase that the processing such as freezing of the indoor heat exchanger 10 "is not started" for the other indoor units U2, U3 and U4 means that the control section 20 does not start the current washing processing for the other indoor units U2, U3 and U4 yet after the previous washing processing for the other indoor units U2, U3 and U4 has been performed.

Next, at the step S103, the control section 20 executes the washing processing not only for the representative indoor unit U1 but also for the other indoor units U2, U3 and U4. That is, the control section 20 makes such control that a time period for performing the washing processing for the representative indoor unit U1 and time periods for performing the washing processing for the other indoor units U2, U3 and U4 partially overlap with each other. For example, the control section 20 may make such control that the timing of starting the washing processing is substantially coincident among the indoor units U1, U2, U3 and U4. Alternatively, the control section 20 may make, for example, such control that the timing of terminating the washing processing is substantially coincident among the indoor units U1, U2, U3 and U4. Alternatively, in a case where there is a difference in a machine type among the indoor units U1, U2, U3 and U4 or a difference in a capacity among the indoor heat exchangers 10, different lengths of a freezing time for the indoor heat exchanger 10 may be mixed. After the processing at the step S103 has been performed, the processing of the control section 20 returns to "START" (RETURN).

Fig. 5 is a flowchart regarding the washing processing in the air-conditioner. That is, Fig. 5 specifically shows, regarding the step S103 of Fig. 4, the washing processing performed for each of the indoor units U1, U2, U3 and U4. At a step S103a of Fig. 5, the control section 20 freezes the indoor heat exchangers 10. Although described later in detail, the control section 20 causes the indoor heat exchangers 10 to function as the evaporators such that frost is formed on the indoor heat exchangers 10. Next, at a step S103b, the control section 20 defrosts the indoor heat exchangers 10. For example, the control section 20 causes the indoor heat exchangers 10 to function as the condensers such that the frost on the indoor heat exchangers 10 is melted. In this manner, dust on the indoor heat exchangers 10 is washed away by water accompanied by defrosting of the frost.

At a step S103c, the control section 20 dries the indoor heat exchangers 10. For example, the control section 20 inhibits the air-conditioning operation for a predetermined period from defrosting, and dries the indoor heat exchangers 10 by natural convection of air. After the processing of the step S103c has been performed, the control section 20 ends a series of processing regarding the washing processing (END).

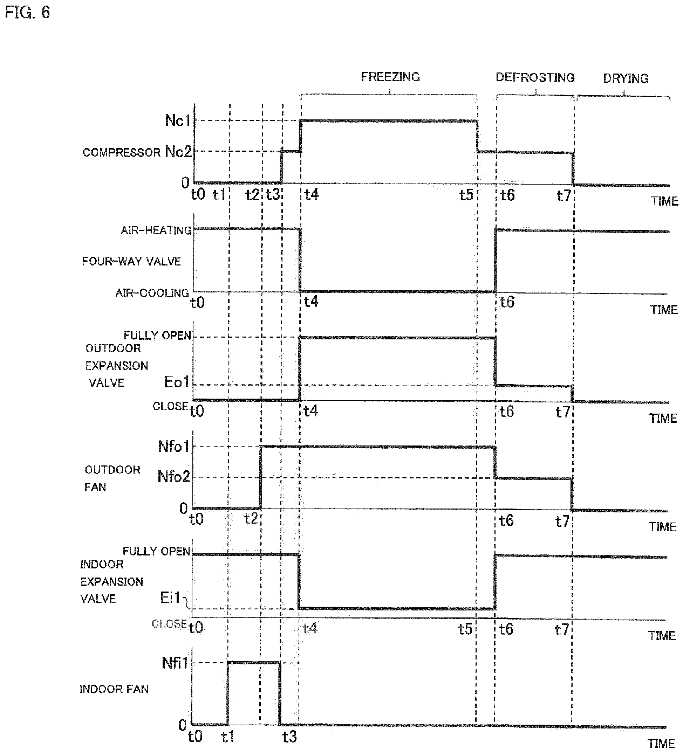

Fig. 6 is a time chart of the washing processing in the air-conditioner (see Figs. 1 and 3 as necessary). Hereinafter, a case where the washing processing is performed for all of the indoor units U1, U2, U3 and U4 will be described as one example. Note that in Fig. 6, the indoor expansion valve 12 of each of the indoor units U1, U2, U3 and U4 is described as an "INDOOR EXPANSION VALVE" and each indoor fan 11 is described as an "INDOOR FAN."

In the example of Fig. 6, the air-conditioner 100 is in a stop state at a time point t0, and a valve body (not shown) of the four-way valve 5 is at an air-heating cycle position. As a preliminary preparation for freezing the indoor heat exchangers 10, the control section 20 drives, between time points t1 to t3, the indoor fans 11 of the indoor units U1, U2, U3 and U4 at a predetermined rotation speed Nfi1. Moreover, the control section 20 drives, from the time point t2, the outdoor fan 3 at a predetermined rotation speed Nfo1. In this manner, indoor and outdoor temperatures are detected. Then, the control section 20 maintains, between the time points t3 to t4, the outdoor expansion valve 4 in a valve close state while driving the outdoor fan 3, and drives the compressor 1 at a relatively-low rotation speed Nc2. In this manner, a pressure difference between a high pressure side and a low pressure side of the four-way valve 4 is adjusted as necessary.

After such processing has been performed, the control section 20 performs, between the time points t4 to t5, the processing of freezing the indoor heat exchanger 10 of each of the indoor units U1, U2, U3 and U4 (S103a of Fig. 5). That is, the control section 20 switches the four-way valve 5 from the air-heating cycle to the air-cooling cycle at the time point t4. Moreover, the control section 20 brings, between the time points t4 to t5, the outdoor expansion valve 4 into an open state (a fully-open state in the example of Fig. 6) while throttling the indoor expansion valves 12 to a predetermined degree Ei1 of opening and driving the compressor 1 at a predetermined rotation speed Nc1.

As described above, the control section 20 throttles the indoor expansion valves 12 of the indoor units U1, U2, U3 and U4 to the predetermined degree Ei1 of opening, and therefore, each indoor heat exchanger 10 functions as the evaporator. As a result, low-temperature low-pressure refrigerant flows in the indoor heat exchangers 10, and the indoor heat exchangers 10 are frozen. For example, the control section 20 keeps, for a predetermined time, a state in which the detection values of the indoor heat exchanger temperature sensors 14 (see Fig. 3) are below zero.

During freezing of each indoor heat exchanger 10 (the time points t4 to t5), the control section 20 drives the outdoor fan 3 at the predetermined rotation speed Nfo1 while bringing each indoor fan 11 into a stop state. As a result, external air is sent into the outdoor heat exchanger 2 functioning as the condenser. Moreover, natural convection of air flows through a clearance among fins (not shown) of each indoor heat exchanger 10. This can reduce excessive cooling of the air-conditioning room. Note that during freezing of each indoor heat exchanger 10, the control section 20 may drive the indoor fans 11 at a low speed.

After each indoor heat exchanger 10 has been frozen, the control section 20 drives, between the time points t5 to t6, the compressor 1 at the relatively-low rotation speed Nc2 as a preliminary preparation for defrosting the indoor heat exchangers 10. In this manner, the pressure difference between the high pressure side and the low pressure side of the four-way valve 5 is adjusted as necessary. Note that in a case where the pressure difference between the high pressure side and the low pressure side of the four-way valve 5 is relatively great, the control section 20 decelerates the compressor 1 as the preliminary preparation for defrosting as shown in Fig. 6. In a case where the above-described pressure difference is too small, the control section 20 accelerates the compressor 1. Moreover, the control section 20 maintains the degrees of opening of the indoor expansion valves 12 at the predetermined degree Ei1 of opening upon freezing.

When each indoor heat exchanger 10 is defrosted (S103b of Fig. 5), the control section 20 switches the four-way valve 5 from the air-cooling cycle to the air-heating cycle. As described above, the pressure difference between the high pressure side and the low pressure side of the four-way valve 5 is adjusted as necessary, and therefore, the four-way valve 5 can be switched while the compressor 1 keeps driving. Note that after freezing of the indoor heat exchangers 10, the control section 20 may stop the compressor 1 once to switch the four-way valve 5 from the air-cooling cycle to the air-heating cycle, and the indoor heat exchangers 10 may be subsequently defrosted.

During defrosting of each indoor heat exchanger 10 (the time points t6 to t7), the control section 20 throttles the outdoor expansion valve 4 to a predetermined degree Eo1 of opening while opening (fully opening in the example of Fig. 6) each indoor expansion valve 12. In this manner, the indoor heat exchangers 10 function as the condensers, and high-temperature refrigerant flows through the heat transfer pipes (not shown) of the indoor heat exchangers 10.

During defrosting of each indoor heat exchanger 10 (the time points t6 to t7), the control section 20 drives the outdoor fan 3 at a predetermined rotation speed Nfo2 while maintaining each indoor fan 11 in the stop state. This can reduce cold air accompanied by defrosting of the indoor heat exchangers 10 from flowing into the air-conditioning room from the indoor units U1, U2, U3 and U4. Note that during defrosting of each indoor heat exchanger 10, the control section 20 may drive the indoor fans 11 at a low speed.

After defrosting of each indoor heat exchanger 10, the control section 20 dries the indoor heat exchangers 10 for a predetermined time from the time point t7 (S103c of Fig. 5). In the example of Fig. 6, the control section 20 stops each type of equipment including each indoor fan 11. In such processing, the control section 20 may inhibit the air-conditioning operation based on operation of the remote controllers 15 for a predetermined time after the end of defrosting of the indoor heat exchangers 10 (the time point t7). This can prevent cold air from flowing into the air-conditioning room from the indoor units U1, U2, U3 and U4, and can dry the indoor heat exchangers 10 by natural convection.

### <Advantageous Effects>

According to the first embodiment, the control section 20 does not start freezing the indoor heat exchangers 10 in the other indoor units U2, U3 and U4 until the predetermined indoor unit U1 of the multiple indoor units U1, U2, U3 and U4 starts the processing of freezing the indoor heat exchanger 10. With this configuration, as compared to the case of performing the washing processing separately for each indoor unit, the frequency of driving the compressor 1 can be reduced, and therefore, the power consumption of the air-conditioner 100 can be significantly reduced.

Freezing of the indoor heat exchanger 10 is performed collectively for the multiple indoor units U1, U2, U3 and U4, and therefore, the frequency of cooling a shared portion of the pipes, in which gas refrigerant flows, in association with such freezing can be reduced. Thus, the power consumptions of the indoor units U1, U2, U3 and U4 per unit capacity can be reduced. As described above, according to the first embodiment, the air-conditioner 100 achieving energy saving in washing of the multiple indoor heat exchangers 10 can be provided.

According to the first embodiment, as compared to the case of performing the washing processing separately for each indoor unit, a time (a total value) required for the washing processing during a predetermined period can be shortened. With this configuration, interference with the air-conditioning operation of the other indoor units U1, U3 and U4 by the washing processing in the indoor unit U2 can be reduced, for example. Thus, user comfortability/convenience can be improved. Note that during a period in which the washing processing including freezing of the indoor heat exchanger 10 is not performed, such an indoor unit can perform the air-conditioning operation based on operation of the remote controller 15.

### <<Second Embodiment>>

A second embodiment is different from the first embodiment in that a control section 20 determines, for a representative indoor unit U1 and other indoor units U2, U3 and U4, not only whether or not the setting of washing processing is valid but also whether or not a condition such as a washing processing time period is satisfied. Note that other points (e.g., a configuration of an air-conditioner 100: see Figs. 1 to 3) are similar to those of the first embodiment. Thus, the differences from the first embodiment will be described, and description of overlapping contents will be omitted.

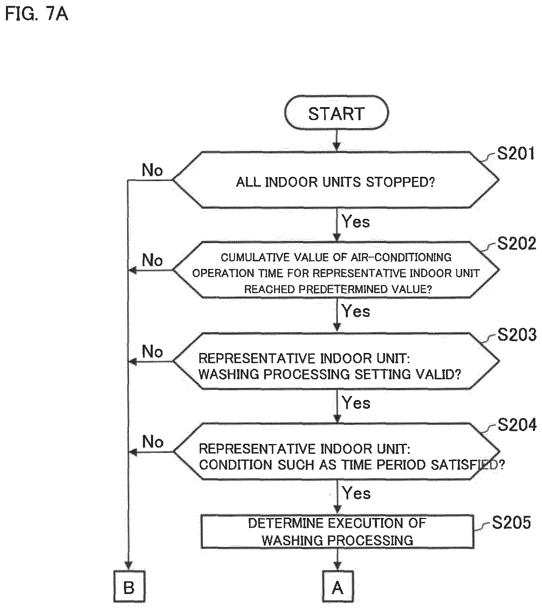

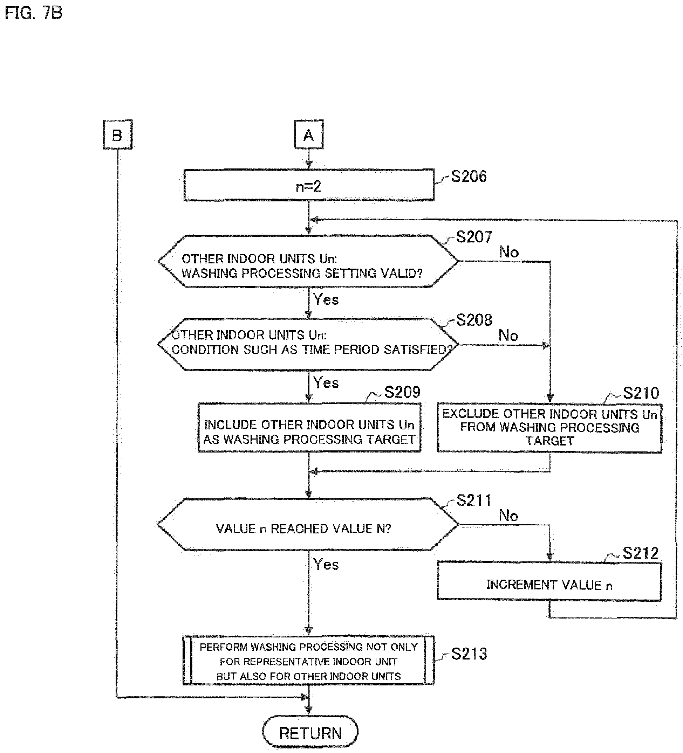

Figs. 7A and 7B are flowcharts of processing executed by the control section of the air-conditioner according to the second embodiment (see Figs. 1 and 3 as necessary). Note that the processing of steps S201 and S202 of Fig. 7A is, in this order, similar to the processing of the steps S101 and S102 of Fig. 4, and therefore, description thereof will be omitted. In a case where a cumulative value of an air-conditioning operation time for the representative indoor unit U1 reaches a predetermined value at the step S202 (S202: Yes), the processing of the control section 20 proceeds to a step S203. On the other hand, in a case where the cumulative value of the air-conditioning operation time for the representative indoor unit U1 does not reach the predetermined value at the step S202 (S202: No), the processing of the control section 20 returns to "START" ("RETURN" of Fig. 7B).

At the step S203, the control section 20 determines whether or not the setting of the washing processing for the representative indoor unit U1 is valid. Note that validity of the setting of the washing processing is, for example, switched by operation of central control equipment 16 (see Fig. 3) by a manager (a user). At the step S203, in a case where the setting of the washing processing for the representative indoor unit U1 is valid (S203: Yes), the processing of the control section 20 proceeds to a step S204. On the other hand, in a case where the setting of the washing processing for the representative indoor unit U1 is invalid (S203: No), the processing of the control section 20 returns to "START" ("RETURN" of Fig. 7B).

At the step S204, the control section 20 determines whether or not the condition such as the washing processing time period is satisfied for the representative indoor unit U1. Note that the day of the washing processing, the date and time of the washing processing or the like can be, in addition to the time period in which the washing processing is performed, set by operation of the central control equipment 16 (see Fig. 3) by the manager (the user).

At the step S204, in a case where the condition such as the washing processing time period is satisfied for the representative indoor unit U1 (S204: Yes), the processing of the control section 20 proceeds to a step S205. For example, in a case where it has been set such that the washing processing is performed in a time period of 6 p.m. to 11 p.m. on Sunday, if it is currently at 7 p.m. on Sunday, the condition such as the washing processing time period is satisfied (S204: Yes). On the other hand, in a case where the condition such as the washing processing time period is not satisfied for the representative indoor unit U1 (S204: No), the processing of the control section 20 returns to "START" ("RETURN" of Fig. 7B).

At the step S205, the control section 20 determines execution of the washing processing. Note that the washing processing is actually performed (S213 of Fig. 7B) after the processing of steps S206 to S212 of Fig. 7B has been performed for the remaining indoor units U2, U3 and U4.

At the step S206 of Fig. 7B, the control section 20 assumes n = 2. This value n is a value used when any of the indoor units U2, U3 and U4 is specified as an indoor unit Un, and is incremented as necessary (S212). At the step S207, the control section 20 determines whether or not the setting of the washing processing for another indoor unit Un is valid. For example, in the case of n = 2, the control section 20 determines, at the step S207, whether or not the setting of the washing processing for the indoor unit U2 is valid. In a case where the setting of the washing processing for another indoor unit Un is valid (S207: Yes), the processing of the control section 20 proceeds to the step S208.

Next, at the step S208, the control section 20 determines whether or not the condition such as the washing processing time period is satisfied for another indoor unit Un. At the step S208, in a case where the condition such as the washing processing time period is satisfied for another indoor unit Un (S208: Yes), the processing of the control section 20 proceeds to the step S209. At the step S209, the control section 20 includes another indoor unit Un (e.g., the indoor unit U2) as a washing processing target.

On the other hand, in a case where the setting of the washing processing for another indoor unit Un is not valid (S207: No) or a case where the condition such as the time period is not satisfied for another indoor unit Un (S208: No), the processing of the control section 20 proceeds to the step S210. At the step S210, the control section 20 excludes another indoor unit Un from the washing processing target. For example, in a case where the setting of the washing processing for the indoor unit U4 is invalid (S207: No), the control section 20 excludes the indoor unit U4 from the washing processing target.

As described above, among the other indoor units U2, U3 and U4, the indoor unit for which the setting of the washing processing (the processing such as freezing of an indoor heat exchanger 10) is invalid or the indoor unit for which at least one condition of the day of the washing processing, the date and time of the washing processing, or the time period of the washing processing is not satisfied are excluded from the washing processing target by the control section 20. Then, after the processing of the step S209 or the step S210 has been performed, the processing of the control section 20 proceeds to the step S211.

At the step S211, the control section 20 determines whether or not the value n reaches a value N. The value N is the total number (four in the second embodiment) of indoor units U1, U2, U3 and U4, and is stored in advance in the control section 20. At the step S211, in a case where the value n does not reach the value N (S211: No), the processing of the control section 20 proceeds to the step S212. At the step S212, the control section 20 increments the value n. Then, after the value n has been incremented, the processing of the control section 20 returns to the step S207. As described above, the control section 20 determines availability of the washing processing sequentially for the indoor units U2, U3 and U4.

At the step S211, in a case where the value n reaches the value N (S211: Yes), the processing of the control section 20 proceeds to the step S213. At the step S213, the control section 20 performs the washing processing not only for the representative indoor unit U1 but also for the other indoor units (e.g., the indoor units U2, U3). That is, the control section 20 executes the washing processing such that a washing processing time period for the representative indoor unit U1 and washing processing time periods for the other indoor units U2 and U3 at least partially overlap with each other. On the other hand, for the indoor unit (e.g., the indoor unit U4) excluded from the washing processing target, the control section 20 does not perform the washing processing at this time.

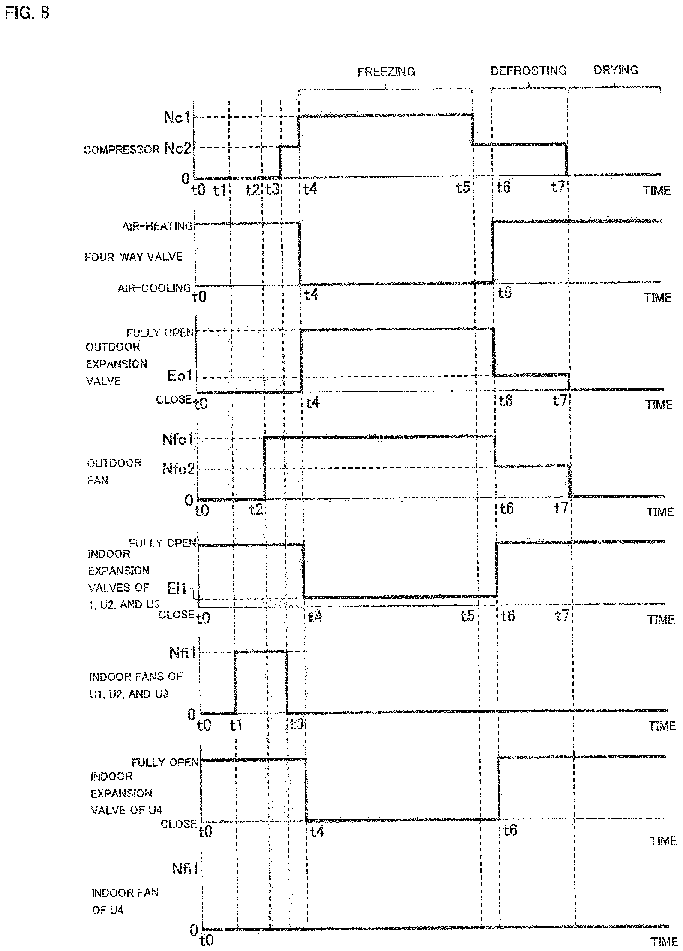

Fig. 8 is a time chart of the washing processing in the air-conditioner. Note that Fig. 8 is different from Fig. 6 of the first embodiment in that each type of equipment of the indoor units U1, U2 and U3 included in the washing processing target and each type of equipment of the indoor unit U4 excluded from the washing processing target are shown separately, but is similar to Fig. 6 on the other points. Hereinafter, the indoor unit U4 excluded from the washing processing target will be mainly described, and description of the other points will be omitted.

As shown in Fig. 8, the control section 20 performs the following processing during the processing of freezing the indoor heat exchangers 10 of the indoor units U1, U2 and U3 (time points t4 to t5). That is, the control section 20 causes, among the indoor units U1, U2, U3 and U4, the indoor heat exchangers 10 of the indoor units U1, U2 and U3 targeted for the processing (freezing) to function as evaporators while closing an indoor expansion valve 12 of the indoor unit U4 not targeted for the processing (freezing). This can prevent low-temperature refrigerant from flowing into the indoor unit U4.

Further, after the above-described processing (freezing), the control section 20 causes, among the indoor units U1, U2, U3 and U4, the indoor heat exchangers 10 of the indoor units U1, U2 and U3 targeted for the processing (freezing) to function as condensers while opening the indoor expansion valve 12 of the indoor unit U4 not targeted for the processing (freezing) ("DEFROSTING" between time points t6 to t7). In this manner, frost on the indoor heat exchanger 10 of each of the indoor units U1, U2 and U3 is melted to wash the indoor heat exchanger 10. Moreover, the indoor expansion valve 12 of the indoor unit U4 not targeted for the washing processing is opened so that accumulation of refrigerant in the indoor heat exchanger 10 of the indoor unit U4 can be prevented.

### <Advantageous Effects>

According to the second embodiment, for each of the representative indoor unit U1 and the other indoor units U2, U3 and U4, it is determined whether or not the setting of the washing processing is valid and whether or not the condition such as the washing processing time period is satisfied. With this configuration, the degree of freedom in user setting regarding the washing processing can be enhanced.

### <<Variations>>

The air-conditioner 100 according to the present invention has been described above with reference to each embodiment, but the present invention is not limited to description of these embodiments and various changes can be made to the present invention. For example, in the first embodiment, the processing of freezing the indoor heat exchanger 10 has been described, but the present invention is not limited to such processing. That is, dew may be formed on the indoor heat exchangers 10 instead of freezing the indoor heat exchangers 10. In a case where dew is formed on the indoor heat exchangers 10 as described above, the control section 20 adjusts, e.g., the degrees of opening of the indoor expansion valves 12 such that the temperatures of the indoor heat exchangers 10 are equal to or lower than an external air dew point and higher than a predetermined freezing temperature, and keeps such a state for a predetermined time. The above-described "freezing temperature" is a temperature at which moisture contained in air starts freezing on the indoor heat exchanger 10 when the temperature of the indoor heat exchanger 10 is gradually decreased. Note that control contents are similar to those in the case of "freezing," except that the degree of opening of the indoor expansion valve 12 is higher in "dew formation" than in the case of "freezing" the indoor heat exchanger 10. The same also applies to the second embodiment.

In each embodiment, the processing that the control section 20 causes, after freezing of the indoor heat exchangers 10, the indoor heat exchangers 10 to function as the condensers to defrost the indoor heat exchangers 10 has been described, but the present invention is not limited to such processing. For example, after freezing of the indoor heat exchangers 10, the control section 20 may increase (e.g., fully open) the degrees of opening of the indoor expansion valves 12 than those upon freezing. With this configuration, high-temperature refrigerant flows into the indoor heat exchangers 10 from the outdoor heat exchanger 2 through the indoor expansion valves 12, thereby defrosting the indoor heat exchangers 10.

In the first embodiment, it has been described that in a case where the cumulative value of the air-conditioning operation time for the representative indoor unit U1 from the end of the previous washing processing reaches the predetermined value (S102 of Fig. 4), the washing processing is executed (S103), but the present invention is not limited to such a configuration. For example, the starting point of accumulation of the air-conditioning operation time may be the end of freezing of, e.g., the indoor unit U1. That is, in a case where the cumulative value of the air-conditioning operation time from the end of the previous processing of freezing the indoor heat exchanger 10 of the representative indoor unit U1 reaches a predetermined value, the control section 20 may execute the above-described processing (freezing) not only for the representative indoor unit U1 but also for the other indoor units U2, U3 and U4. Alternatively, in a case where a cumulative value of a drive time of the indoor fan 11 (the indoor fan 11 of the indoor unit U1) from the end of the previous processing of freezing the indoor heat exchanger 10 of the representative indoor unit U1 reaches a predetermined value, the above-described processing (freezing) may be executed not only for the representative indoor unit U1 but also for the other indoor units U2, U3 and U4. Note that the same also applies to the second embodiment. Note that even when the air-conditioning operation such as the air-cooling operation or the air-heating operation is not performed, the control section 20 drives the indoor fans 11 as necessary in some cases. Thus, the air-conditioning operation time and the drive time of the indoor fan 11 might be different from each other.

In a case where the cumulative value of the air-conditioning operation time for the representative indoor unit U1 or the cumulative value of the drive time of the indoor fan 11 does not reach the predetermined value, when a command for starting the processing (freezing of the indoor heat exchanger 10) is provided to the other indoor units U2, U3 and U4 by operation of the remote controllers 15, it is preferred that the control section 20 does not accept such a start command. Thus, unnecessary frequent washing processing by operation of the individual remote controller 15 by a user other than the manager can be prevented. Consequently, the power consumption of the air-conditioner 100 can be reduced.

In each embodiment, the case where the number of representative indoor units U1 is one has been described, but the number of representative indoor units (predetermined indoor units) may be two or more. In a case where the sum, which is taken for two or more representative indoor units, of the cumulative value of the air-conditioning operation time from the end of the previous processing of freezing the indoor heat exchanger 10 (or a value obtained by averaging of the sum by the number of representative indoor units) reaches a predetermined value, the control section 20 may execute the processing of freezing the indoor heat exchanger 10 not only for the two or more representative indoor units but also for the other indoor units. Similarly, in a case where the sum, which is taken for two or more representative indoor units, of the cumulative value of the drive time of the indoor fan 11 from the end of the previous processing of freezing the indoor heat exchanger 10 (or a value obtained by averaging of the sum by the number of representative indoor units) reaches a predetermined value, the control section 20 may execute the processing of freezing the indoor heat exchanger 10 not only for the two or more representative indoor units but also for the other indoor units. With this configuration, the control section 20 can execute the washing processing based on, e.g., the average air-conditioning operation time for the two or more representative indoor units. Note that all of the indoor units U1, U2, U3 and U4 may be set as representative indoor units. In this case, the control section 20 can also execute the washing processing with a proper frequency based on the above-described air-conditioning operation time or the above-described drive time of the indoor fan 11.

In each embodiment, the representative indoor unit U1 may be set based on, e.g., identification information on the remote controller 15. That is, the multiple indoor units U1, U2, U3 and U4 include the representative indoor unit U1 (the predetermined indoor unit) connected to the representative remote controller 15 (a predetermined remote controller) through the line m4 (see Fig. 2) and the other indoor units U2, U3 and U4 connected to the other remote controllers 15 through the other lines m4 (see Fig. 2). In such a configuration, the representative remote controller 15 is preferably set in advance, or is preferably changeable based on operation of the central control equipment 16. With this configuration, the manager can set the representative indoor unit U1 as necessary based on, e.g., the identification information on each remote controller 15.

Multiple indoor units (not shown) may be connected to the representative remote controller 15. The multiple indoor units include two or more indoor units connected to the representative remote controller 15 (the predetermined remote controller) through lines m4 and other indoor units connected to other remote controllers through other lines m4. In such a configuration, the representative indoor unit (the predetermined indoor unit) is preferably a single predetermined indoor unit included in the two or more indoor units connected to the representative remote controller 15 through the lines m4. With this configuration, the manager can set a particular indoor unit as a representative indoor unit even in the case of a configuration in which the multiple indoor units are connected to the single remote controller 15.

During the processing of freezing the indoor heat exchanger 10, in a case where an air-conditioning operation command is provided to the representative indoor unit U1 (the predetermined indoor unit) by operation of the remote controller 15 or the central control equipment 16, the control section 20 preferably discontinues the processing (freezing) for the representative indoor unit U1 and the other indoor units U2, U3 and U4, and preferably executes the air-conditioning operation in the representative indoor unit U1. With this configuration, a user's intention to perform the air-conditioning operation in the representative indoor unit U1 can be properly reflected.

During the processing of freezing the indoor heat exchanger 10, in a case where the air-conditioning operation command is provided to at least one of the other indoor units U2, U3 and U4 by operation of the remote controllers 15 or the central control equipment 16, the control section 20 preferably discontinues the processing (freezing) for the representative indoor unit U1 (the predetermined indoor unit) and the other indoor units U2, U3 and U4, and preferably executes the air-conditioning operation in at least one of the other indoor units. With this configuration, a user's intention to perform the air-conditioning operation in another indoor unit U2 can be properly reflected.

In each embodiment, the case where the washing processing includes freezing, defrosting, and drying of the indoor heat exchanger 10 has been described (see Fig. 5), but the present invention is not limited to such a case. For example, one or both of defrosting and drying of the indoor heat exchanger 10 may be omitted as necessary. This is because defrosting or drying of the indoor heat exchanger 10 progresses by natural convection of air in the indoor unit. The types of indoor units U1 to U4 are not specifically limited. For example, any one of multiple types including a four-direction cassette type, a ceiling embedded type, a floor standing type, and a wall hanging type may be used. Alternatively, multiple types of indoor units may be mixed.

In each embodiment, the configuration in which the outdoor unit Uo (see Fig. 1) includes the outdoor expansion valve 4 and the four-way valve 5 has been described, but the present invention is not limited to such a configuration. For example, the outdoor expansion valve 4 and the four-way valve 5 may be omitted from an air-conditioner dedicated to air-cooling. In each embodiment, the configuration in which the four indoor units U1, U2, U3 and U4 (see Fig. 1) are provided has been described, but the number of indoor units connected in parallel in a single system may be two, three, or five or more.

In each embodiment, the configuration in which the air-conditioner 100 (see Fig. 1) includes the single outdoor unit Uo has been described, but it may be configured such that multiple outdoor units are connected in parallel in a single system. Each embodiment is applicable to various types of air-conditioners such as a building multi-type air-conditioner (variable refrigerant flow (VRF)) and a packaged air-conditioner (PAC).

A program causing a computer to execute the processing (see Figs. 4, 5, 7A, and 7B) of the control section 20 can be provided through a communication line, or a predetermined program can be distributed with the predetermined program being written in a recording medium such as a CD-ROM.

### LIST OF REFERENCE SIGNS

1 Compressor
2 Outdoor Heat Exchanger
3 Outdoor Fan
4 Outdoor Expansion Valve
5 Four-Way Valve
10 Indoor Heat Exchanger
11 Indoor Fan
12 Indoor Expansion Valve
15 Remote Controller
16 Central Control Equipment
20 Control Section
100 Air-Conditioner
J1, J2, J3, J4, J5, J6, J7, J8, J9, J10, J11, J12, J13, J14 Pipe
m4 Line
Q Refrigerant Circuit
Uo Outdoor Unit
U1 Indoor Unit (Predetermined Indoor Unit)
U2, U3, U4 Indoor Unit (Other Indoor Units)

## Claims

1. An air-conditioner (100) comprising:
a refrigerant circuit (Q) configured such that an outdoor unit (Uo) including a compressor (1) and an outdoor heat exchanger (2) and multiple indoor units including indoor heat exchangers (10) are connected to each other through a pipe (J1, J2, J3, J4, J5, J6, J7, J8, J9, J10, J11, J12, J13, J14); and
a control section (20) configured to control at least the compressor (1),
the air-conditioner (100) being **characterized in that**
when a predetermined condition is satisfied, the control section (20) automatically starts processing of freezing or forming dew on the indoor heat exchangers (10) for a predetermined indoor unit (U1) included in the multiple indoor units and other indoor units (U2, U3, U4) such that a time period for performing the processing for the predetermined indoor unit (U1) and time periods for performing the processing for the other indoor units (U2, U3, U4) at least partially overlap with each other,
the predetermined condition is that at least a cumulative value of an air-conditioning operation time from an end of previous processing for the predetermined indoor unit (U1) or a cumulative value of a drive time of an indoor fan (11) from the end of the previous processing for the predetermined indoor unit (U1) reaches a predetermined value, and
in a case where the cumulative value of the air-conditioning operation time from the end of the previous processing for the predetermined indoor unit (U1) does not reach the predetermined value or the cumulative value of the drive time of the indoor fan (11) from the end of the previous processing for the predetermined indoor unit (U1) does not reach the predetermined value, the processing is not automatically started for the other indoor units (U2, U3, U4).

2. The air-conditioner (100) according to claim 1, wherein
in the case where the cumulative value of the air-conditioning operation time for the predetermined indoor unit (U1) or the cumulative value of the drive time of the indoor fan (11) does not reach the predetermined value,
when a command for starting the processing is provided to the other indoor units (U2, U3, U4) by operation of a remote controller (15), the control section (20) does not accept the start command.

3. The air-conditioner (100) according to claim 1, wherein
the number of predetermined indoor units (U1) is two or more, and in a case where a sum, which is taken for the two or more predetermined indoor units (U1), of the cumulative value of the air-conditioning operation time from the end of the previous processing or a value obtained by averaging of the sum by the number of predetermined indoor units (U1) reaches a predetermined value or a sum, which is taken for the two or more predetermined indoor units (U1), of the cumulative value of the drive time of the indoor fan (11) from the end of the previous processing or a value obtained by averaging of the sum by the number of predetermined indoor units (U1) reaches a predetermined value, the control section (20) executes the processing not only for the two or more predetermined indoor units (U1) but also for other indoor units (U2, U3, U4).

4. The air-conditioner (100) according to claim 1, wherein
the multiple indoor units include the predetermined indoor unit (U1) connected to a predetermined remote controller (15) through a line (m4) and the other indoor units (U2, U3, U4) connected to other remote controllers (15) through other lines (m4), and
the predetermined remote controller (15) is set in advance, or is changeable based on operation of central control equipment (16).

5. The air-conditioner (100) according to claim 1, wherein
the multiple indoor units (U1) include two or more indoor units connected to a predetermined remote controller (15) through a line (m4) and other indoor units (U2, U3, U4) connected to other remote controllers (15) through other lines (m4), and
the predetermined indoor unit (U1) is a single predetermined indoor unit (U1) included in the two or more indoor units connected to the predetermined remote controller (15) through the line (m4).

6. The air-conditioner (100) according to claim 1, wherein
the control section (20) excludes, among the other indoor units (U2, U3, U4), an indoor unit for which a processing setting is invalid or an indoor unit for which at least one condition of a day of the processing, date and time of the processing, or a time period of the processing is not satisfied from a processing target.

7. The air-conditioner (100) according to claim 6, wherein
each of the multiple indoor units includes an indoor expansion valve (12), and
among the multiple indoor units, the control section (20) causes, during the processing, the indoor heat exchanger (10) of the indoor unit targeted for the processing to function as an evaporator while closing the indoor expansion valve (12) of the indoor unit not targeted for the processing, and after the processing, causes the indoor heat exchanger (10) of the indoor unit targeted for the processing to function as a condenser while opening the indoor expansion valve (12) of the indoor unit not targeted for the processing.

8. The air-conditioner (100) according to claim 1, wherein
in a case where an air-conditioning operation command is provided to the predetermined indoor unit (U1) by operation of a remote controller (15) or central control equipment (16) during the processing, the control section (20) discontinues the processing for the predetermined indoor unit (U1) and the other indoor units (U2, U3, U4), and executes air-conditioning operation in the predetermined indoor unit (U1).

9. The air-conditioner (100) according to claim 1, wherein
in a case where an air-conditioning operation command is provided to at least one of the other indoor units by operation of a remote controller (15) or central control equipment (16) during the processing, the control section (20) discontinues the processing for the predetermined indoor unit (U1) and the other indoor units (U2, U3, U4), and executes air-conditioning operation in the at least one of the other indoor units (U2, U3, U4).

## Patentansprüche

1. Klimaanlage (100) umfassend:
einen Kältemittelkreislauf (Q), der so konfiguriert ist, dass eine Außeneinheit (Uo), die einen Kompressor (1) und einen Außenwärmetauscher (2) beinhaltet, und mehrere Inneneinheiten, die Innenwärmetauscher (10) beinhalten, durch ein Rohr (J1, J2, J3, J4, J5, J6, J7, J8, J9, J10, J11, J12, J13, J14) miteinander verbunden sind; und
einen Steuerabschnitt (20), der konfiguriert ist, um mindestens den Kompressor (1) zu steuern,
wobei die Klimaanlage (100) **dadurch gekennzeichnet ist, dass**
wenn eine vorbestimmte Bedingung erfüllt ist, der Steuerabschnitt (20) automatisch die Verarbeitung des Einfrierens oder Bildens von Tau an den Innenwärmetauschern (10) für eine vorbestimmte Inneneinheit (U1), die in den mehreren Inneneinheiten und anderen Inneneinheiten (U2, U3, U4) beinhaltet ist, startet, so dass sich ein Zeitraum zum Durchführen der Verarbeitung für die vorbestimmte Inneneinheit (U1) und Zeiträume zum Durchführen der Verarbeitung für die anderen Inneneinheiten (U2, U3, U4) mindestens teilweise überlappen,
die vorbestimmte Bedingung ist, dass mindestens ein kumulativer Wert einer Klimaanlagenbetriebszeit ab einem Ende der vorherigen Verarbeitung für die vorbestimmte Inneneinheit (U1) oder ein kumulativer Wert einer Antriebszeit eines Innengebläses (11) ab dem Ende der vorherigen Verarbeitung für die vorbestimmte Inneneinheit (U1) einen vorbestimmten Wert erreicht, und
in einem Fall, in dem der kumulative Wert der Klimaanlagenbetriebszeit ab dem Ende der vorherigen Verarbeitung für die vorbestimmte Inneneinheit (U1) den vorbestimmten Wert nicht erreicht oder der kumulative Wert der Antriebszeit des Innengebläses (11) ab dem Ende der vorherigen Verarbeitung für die vorbestimmte Inneneinheit (U1) den vorbestimmten Wert nicht erreicht, die Verarbeitung für die anderen Inneneinheiten (U2, U3, U4) nicht automatisch gestartet wird.

2. Klimaanlage (100) nach Anspruch 1, wobei
in dem Fall, in dem der kumulative Wert der Klimaanlagenbetriebszeit für die vorbestimmte Inneneinheit (U1) oder der kumulative Wert der Antriebszeit des Innengebläses (11) den vorbestimmten Wert nicht erreicht,
wenn ein Befehl zum Starten der Verarbeitung den anderen Inneneinheiten (U2, U3, U4) durch den Betrieb einer Fernsteuerung (15) bereitgestellt wird, der Steuerabschnitt (20) den Startbefehl nicht akzeptiert.

3. Klimaanlage (100) nach Anspruch 1, wobei
die Anzahl der vorbestimmten Inneneinheiten (U1) zwei oder mehr beträgt, und in einem Fall, in dem eine Summe, die für die zwei oder mehr vorbestimmten Inneneinheiten (U1) genommen wird, des kumulativen Werts der Klimaanlagenbetriebszeit ab dem Ende der vorherigen Verarbeitung oder eines Werts, der durch Mittelung der Summe durch die Anzahl der vorbestimmten Inneneinheiten (U1) erhalten wird, einen vorbestimmten Wert erreicht, oder eine Summe, die für die zwei oder mehr vorbestimmten Inneneinheiten (U1) genommen wird, des kumulativen Werts der Antriebszeit des Innengebläses (11) ab dem Ende der vorherigen Verarbeitung oder eines Werts, der durch Mittelung der Summe durch die Anzahl der vorbestimmten Inneneinheiten (U1) erhalten wird, einen vorbestimmten Wert erreicht, der Steuerabschnitt (20) die Verarbeitung nicht nur für die zwei oder mehr vorbestimmten Inneneinheiten (U1), sondern auch für andere Inneneinheiten (U2, U3, U4) ausführt.

4. Klimaanlage (100) nach Anspruch 1, wobei
die mehreren Inneneinheiten die vorbestimmte Inneneinheit (U1), die mit einer vorbestimmten Fernsteuerung (15) durch eine Leitung (m4) verbunden ist, und die anderen Inneneinheiten (U2, U3, U4), die mit anderen Fernsteuerungen (15) durch andere Leitungen (m4) verbunden sind, beinhalten, und
die vorbestimmte Fernsteuerung (15) im Voraus eingestellt wird oder basierend auf dem Betrieb der zentralen Steuerausrüstung (16) veränderbar ist.

5. Klimaanlage (100) nach Anspruch 1, wobei
die mehreren Inneneinheiten (U1) zwei oder mehr Inneneinheiten, die mit einer vorbestimmten Fernsteuerung (15) durch eine Leitung (m4) verbunden sind, und andere Inneneinheiten (U2, U3, U4), die mit anderen Fernsteuerungen (15) durch andere Leitungen (m4) verbunden sind, beinhalten, und
die vorbestimmte Inneneinheit (U1) eine einzelne vorbestimmte Inneneinheit (U1) ist, die in den zwei oder mehr Inneneinheiten beinhaltet ist, die mit der vorbestimmten Fernsteuerung (15) durch die Leitung (m4) verbunden sind.

6. Klimaanlage (100) nach Anspruch 1, wobei
der Steuerabschnitt (20) unter den anderen Inneneinheiten (U2, U3, U4) eine Inneneinheit, für die eine Verarbeitungseinstellung ungültig ist, oder eine Inneneinheit, für die mindestens eine Bedingung eines Tages der Verarbeitung, eines Datums und einer Zeit der Verarbeitung oder eines Zeitraums der Verarbeitung nicht erfüllt ist, von einem Verarbeitungsziel ausschließt.

7. Klimaanlage (100) nach Anspruch 6, wobei
jede der mehreren Inneneinheiten ein Innenexpansionsventil (12) beinhaltet, und
unter den mehreren Inneneinheiten der Steuerabschnitt (20) während der Verarbeitung den Innenwärmetauscher (10) der Inneneinheit, die für die Verarbeitung bestimmt ist, veranlasst, als ein Verdampfer zu fungieren, während das Innenexpansionsventil (12) der Inneneinheit, die nicht für die Verarbeitung bestimmt ist, geschlossen wird, und nach der Verarbeitung den Innenwärmetauscher (10) der Inneneinheit, die für die Verarbeitung bestimmt ist, veranlasst, als ein Kondensator zu fungieren, während das Innenexpansionsventil (12) der Inneneinheit, die nicht für die Verarbeitung bestimmt ist, geöffnet wird.

8. Klimaanlage (100) nach Anspruch 1, wobei
in einem Fall, in dem ein Klimaanlagenbetriebsbefehl der vorbestimmten Inneneinheit (U1) durch den Betrieb einer Fernsteuerung (15) oder einer zentralen Steuerausrüstung (16) während der Verarbeitung bereitgestellt wird, der Steuerabschnitt (20) die Verarbeitung für die vorbestimmte Inneneinheit (U1) und die anderen Inneneinheiten (U2, U3, U4) unterbricht und einen Klimaanlagenbetrieb in der vorbestimmten Inneneinheit (U1) ausführt.

9. Klimaanlage (100) nach Anspruch 1, wobei
in einem Fall, in dem ein Klimaanlagenbetriebsbefehl mindestens einer der anderen Inneneinheiten durch den Betrieb einer Fernsteuerung (15) oder einer zentralen Steuerausrüstung (16) während der Verarbeitung bereitgestellt wird, der Steuerabschnitt (20) die Verarbeitung für die vorbestimmte Inneneinheit (U1) und die anderen Inneneinheiten (U2, U3, U4) unterbricht und einen Klimaanlagenbetrieb in der mindestens einen der anderen Inneneinheiten (U2, U3, U4) ausführt.

## Revendications

1. Climatiseur (100) comprenant :
un circuit de réfrigérant (Q) configuré de sorte qu'une unité extérieure (Uo) comprenant un compresseur (1) et un échangeur de chaleur extérieur (2) et de multiples unités intérieures comprenant des échangeurs de chaleur intérieurs (10) sont reliées les unes aux autres par l'intermédiaire d'un tuyau (J1, J2, J3, J4, J5, J6, J7, J8, J9, J10, J11, J12, J13, J14) ; et
une section de commande (20) configurée pour commander au moins le compresseur (1),
le climatiseur (100) étant **caractérisé en ce que**
lorsqu'une condition prédéterminée est satisfaite, la section de commande (20) démarre automatiquement un traitement de congélation ou de formation de rosée sur les échangeurs de chaleur intérieurs (10) pour une unité intérieure prédéterminée (U1) incluse dans les multiples unités intérieures et d'autres unités intérieures (U2, U3, U4) de sorte qu'une période de temps pour effectuer le traitement pour l'unité intérieure prédéterminée (U1) et des périodes de temps pour effectuer le traitement pour les autres unités intérieures (U2, U3, U4) se chevauchent au moins partiellement,
la condition prédéterminée est qu'au moins une valeur cumulative d'un temps de fonctionnement de climatisation à partir d'une fin de traitement précédent pour l'unité intérieure prédéterminée (U1) ou une valeur cumulative d'un temps d'entraînement d'un ventilateur intérieur (11) à partir de la fin du traitement précédent pour l'unité intérieure prédéterminée (U1) atteint une valeur prédéterminée, et
dans un cas où la valeur cumulative du temps de fonctionnement de climatisation à partir de la fin du traitement précédent pour l'unité intérieure prédéterminée (U1) n'atteint pas la valeur prédéterminée ou la valeur cumulative du temps d'entraînement du ventilateur intérieur (11) à partir de la fin du traitement précédent pour l'unité intérieure prédéterminée (U1) n'atteint pas la valeur prédéterminée, le traitement n'est pas démarré automatiquement pour les autres unités intérieures (U2, U3, U4).

2. Climatiseur (100) selon la revendication 1, dans lequel
dans le cas où la valeur cumulative du temps de fonctionnement de climatisation pour l'unité intérieure prédéterminée (U1) ou la valeur cumulative du temps d'entraînement du ventilateur intérieur (11) n'atteint pas la valeur prédéterminée,
lorsqu'une commande pour démarrer le traitement est fournie aux autres unités intérieures (U2, U3, U4) par le fonctionnement d'un dispositif de commande à distance (15), la section de commande (20) n'accepte pas la commande de démarrage.

3. Climatiseur (100) selon la revendication 1, dans lequel
le nombre d'unités intérieures prédéterminées (U1) est de deux ou plus, et dans un cas où une somme, qui est prise pour les deux ou plus unités intérieures prédéterminées (U1), de la valeur cumulative du temps de fonctionnement de climatisation à partir de la fin du traitement précédent ou d'une valeur obtenue en faisant la moyenne de la somme par le nombre d'unités intérieures prédéterminées (U1) atteint une valeur prédéterminée ou une somme, qui est prise pour les deux ou plus unités intérieures prédéterminées (U1), de la valeur cumulative du temps d'entraînement du ventilateur intérieur (11) à partir de la fin du traitement précédent ou d'une valeur obtenue en faisant la moyenne de la somme par le nombre d'unités intérieures prédéterminées (U1) atteint une valeur prédéterminée, la section de commande (20) exécute le traitement non seulement pour les deux ou plus unités intérieures prédéterminées (U1) mais également pour d'autres unités intérieures (U2, U3, U4).

4. Climatiseur (100) selon la revendication 1, dans lequel
les multiples unités intérieures comprennent l'unité intérieure prédéterminée (U1) reliée à un dispositif de commande à distance prédéterminé (15) par l'intermédiaire d'une ligne (m4) et les autres unités intérieures (U2, U3, U4) reliées à d'autres dispositifs de commande à distance (15) par l'intermédiaire d'autres lignes (m4), et
le dispositif de commande à distance prédéterminé (15) est réglé à l'avance, ou peut être changé sur la base du fonctionnement d'un équipement de commande central (16).

5. Climatiseur (100) selon la revendication 1, dans lequel
les multiples unités intérieures (U1) comprennent deux unités intérieures ou plus reliées à un dispositif de commande à distance prédéterminé (15) par l'intermédiaire d'une ligne (m4) et d'autres unités intérieures (U2, U3, U4) reliées à d'autres dispositifs de commande à distance (15) par l'intermédiaire d'autres lignes (m4), et
l'unité intérieure prédéterminée (U1) est une seule unité intérieure prédéterminée (U1) incluse dans les deux unités intérieures ou plus reliées au dispositif de commande à distance prédéterminé (15) par l'intermédiaire de la ligne (m4).

6. Climatiseur (100) selon la revendication 1, dans lequel
la section de commande (20) exclut, parmi les autres unités intérieures (U2, U3, U4), une unité intérieure pour laquelle un réglage de traitement est invalide ou une unité intérieure pour laquelle au moins une condition d'un jour du traitement, d'une date et d'une heure du traitement, ou d'une période de temps du traitement n'est pas satisfaite à partir d'une cible de traitement.

7. Climatiseur (100) selon la revendication 6, dans lequel
chacune des multiples unités intérieures comprend une soupape de détente intérieure (12), et
parmi les multiples unités intérieures, la section de commande (20) amène, pendant le traitement, l'échangeur de chaleur intérieur (10) de l'unité intérieure ciblée pour le traitement à fonctionner comme un évaporateur tout en fermant la soupape de détente intérieure (12) de l'unité intérieure non ciblée pour le traitement, et après le traitement, amène l'échangeur de chaleur intérieur (10) de l'unité intérieure ciblée pour le traitement à fonctionner comme un condenseur tout en ouvrant la soupape de détente intérieure (12) de l'unité intérieure non ciblée pour le traitement.

8. Climatiseur (100) selon la revendication 1, dans lequel
dans un cas où une commande de fonctionnement de climatisation est fournie à l'unité intérieure prédéterminée (U1) par le fonctionnement d'un dispositif de commande à distance (15) ou d'un équipement de commande central (16) pendant le traitement, la section de commande (20) interrompt le traitement pour l'unité intérieure prédéterminée (U1) et les autres unités intérieures (U2, U3, U4), et exécute le fonctionnement de climatisation dans l'unité intérieure prédéterminée (U1).

9. Climatiseur (100) selon la revendication 1, dans lequel
dans un cas où une commande de fonctionnement de climatisation est fournie à au moins l'une des autres unités intérieures par le fonctionnement d'un dispositif de commande à distance (15) ou d'un équipement de commande central (16) pendant le traitement, la section de commande (20) interrompt le traitement pour l'unité intérieure prédéterminée (U1) et les autres unités intérieures (U2, U3, U4), et exécute le fonctionnement de climatisation dans l'au moins une des autres unités intérieures (U2, U3, U4).
